# EUROPÄISCHE PATENTSCHRIFT

(11) **EP 3 060 427 B1**
(45) Veröffentlichungstag und Bekanntmachung des Hinweises auf die Patenterteilung: **19.05.2021**
(21) Anmeldenummer: 14786212.2
(22) Anmeldetag: 20.10.2014
(51) Int. Cl.: B60N 2/56

(54) **LUFTVERSORGUNGSEINRICHTUNG FÜR EINEN FAHRZEUGSITZ UND VERFAHREN ZUM BETREIBEN DER LUFTVERSORGUNGSEINRICHTUNG**
AIR SUPPLY DEVICE FOR A MOTOR VEHICLE SEAT AND METHOD FOR OPERATING THE AIR SUPPLY DEVICE
SYSTÈME D'ALIMENTATION EN AIR POUR UN SIÈGE DE VÉHICULE ET PROCÉDÉ POUR FONCTIONNEMENT DU SYSTÈME D'ALIMENTATION EN AIR

(30) Priorität: 23.10.2013 DE 102013221516
(43) Veröffentlichungstag der Anmeldung: 31.08.2016
(73) Patentinhaber: Bayerische Motoren Werke Aktiengesellschaft, 80809 München (DE)
(72) Erfinder: GEITHNER, Sebastian, 81545 Muenchen (DE); NORDALM, Hendrik, 80807 München (DE)
(86) Internationale Anmeldenummer: PCT/EP2014/072438
(87) Internationale Veröffentlichungsnummer: WO 2015/059092

(56) Entgegenhaltungen:
- DE-B3-102004 030 706
- US-A1- 2003 150 229
- US-A1- 2013 043 320

## Beschreibung

Die Erfindung betrifft einen Fahrzeugsitz nach dem Oberbegriff des Anspruchs 1, sowie ein Verfahren zum Betreiben einer entsprechend ausgestalteten Luftversorgungseinrichtung.

Aus der EP 1 778 521 B1 ist bereits eine Luftversorgungseinrichtung für einen Fahrzeugsitz entsprechend dem Oberbegriff des Anspruchs 1 mit einer im oberen Bereich des Fahrzeugsitzes vorgesehenen Luftausströmöffnung, über die der Kopf-, Schulter- und Nackenbereich des Sitzinsassen mit einem Luftstrom beaufschlagbar ist, bekannt, wobei der Luftstrom mittels einer Steuereinheit durch Steuerung oder Regelung einer Lüfterdrehzahl eines Gebläses einstellbar und über ein Heizelement erwärmbar ist, und wobei die Steuereinheit zumindest ein Einschaltsignal zum Einschalten der Luftversorgungseinrichtung und ein Temperatursignal von einem Temperatursensor, das über die Innenraumtemperatur informiert, zugeführt wird. Hierbei wird bereits vor dem Einschalten der Luftversorgungseinrichtung eine Vorkonditionierung des Heizelements veranlasst, sobald das Fahrzeug entriegelt und/oder geöffnet wird und gleichzeitig die Außentemperatur und/oder Innenraumtemperatur einen in einer Speichereinrichtung vorabgespeicherten Schwellwert unterschreitet.

Eine derartige Luftversorgungseinrichtung bzw. ein entsprechender Betrieb der Luftversorgungseinrichtung führt zwar dazu, dass direkt beim Einschalten der Luftversorgungseinrichtung die ausströmende Luft bereits angenehm temperiert ist, allerdings ist dies mit einer nicht unerheblichen Bordnetzbelastung des Fahrzeugs und dementsprechend einem hohen Energieverbrauch bereits vor dem Betrieb des Fahrzeugs verbunden.

Aus der DE 10 2004 030 706 B3 ist ebenfalls eine für den Nackenbereich ausgebildete Luftversorgungseinrichtung für einen Fahrzeugsitz bekannt, wobei die Steuereinrichtung der Luftversorgungseinrichtung die Lüfterdrehzahl des Gebläses ansprechend auf die Außentemperatur und die Fahrgeschwindigkeit geregelt wird.

Aufgabe der Erfindung ist nun, einen Fahrzeugsitz, sowie ein entsprechendes Verfahren zum Betreiben einer Luftversorgungseinrichtung für einen Fahrzeugsitz bereitzustellen, durch das auf energieeffiziente Weise beim Einschalten der Luftversorgungseinrichtung der Fahrer eine für ihn angenehme Temperierung des Kopf-, Schulter- und Nackenbereichs erfährt.

Diese Aufgabe wird durch einen Fahrzeugsitz nach Anspruch 1, sowie ein Verfahren zum Betreiben einer entsprechend ausgebildeten Luftversorgungseinrichtung nach Anspruch 5 gelöst. Vorteilhafte Weiterbildungen ergeben sich aus den abhängigen Ansprüchen. Das erfindungsgemäße Verfahren, sowie dessen vorteilhafte Ausgestaltungen können mittels eines implementierten Algorithmus oder einer entsprechenden Baugruppenanordnung in der dafür vorgesehenen Steuereinheit durchgeführt werden.

Der Fahrzeugsitz weist - wie aus dem Stand der Technik bereits bekannt - eine im oberen Bereich des Fahrzeugsitzes vorgesehene Luftausströmöffnung auf, über die der Kopf-, Schulter- und Nackenbereich des Sitzinsassen mit einem Luftstrom beaufschlagbar ist. Der Luftstrom ist dabei mittels einer Steuereinheit durch Steuerung oder Regelung einer Lüfterdrehzahl eines Gebläses einstellbar und über ein ansteuerbares Heizelement erwärmbar.

Grundgedanke der Erfindung ist, aus energieeffizienten Gesichtspunkten die Luftversorgungseinrichtung bzw. das Heizelement und das Gebläse grundsätzlich erst dann zu aktivieren, wenn ein Einschaltsignal zum Einschalten der Luftversorgungseinrichtung vorliegt. In der Regel liegt ein Einschaltsignal dann vor, wenn ein Fahrzeuginsasse ein zum Aktivieren der Luftversorgungseinrichtung vorgesehenes Bedienelement betätigt. Alternativ kann ein Einschaltsignal auch aufgrund einer automatischen Aktivierung der Luftversorgungseinrichtung, bspw. beim Öffnen des Fahrzeugverdecks und ggf. bei Vorliegen einer weiteren Bedingung, erzeugt und an die Steuereinheit gesendet oder dort erzeugt werden.

Um den Fahrzeugsitzinsassen vor einem zu kalten Luftstrom während der Aufheizphase des Heizelements der Luftversorgungseinrichtung zu schützen, der insbesondere bei geringen Fahrzeuginnenraumtemperaturen als störend empfunden werden kann, ist erfindungsgemäß vorgesehen, dass der Steuereinheit zusätzlich ein Temperatursignal, das über die Innenraumtemperatur informiert, zugeführt wird, und dass die Steuereinheit ansprechend auf das Einschaltsignal das Heizelement und das Gebläse einschaltet und zumindest das Gebläse abhängig von der Innenraumtemperatur ansteuert.

Erfindungsgemäß ist die Steuereinheit derart ausgestaltet, dass diese ansprechend auf ein Einschaltsignal veranlasst, dass das Gebläse lediglich mit einer vorgegebenen geringen Minimum-Lüfterdrehzahl betrieben wird, wenn das Temperatursignal aussagt, dass die Innenraumtemperatur kleiner als ein vorgegebener Temperatur-Schwellwert ist. Dabei können sowohl die Minimum-Lüfterdrehzahl, als auch der Temperatur-Schwellwert fest oder in Abhängigkeit vorgegebener Parameterwerte variabel vorgegeben und in einer entsprechenden Speichereinheit abgelegt werden. Wird für den Temperatur-Schwellwert ein konstanter Wert angenommen, so kann hierfür bspw. eine Temperatur von ca. 10°C vorgeben werden. Bei der Minimum-Lüfterdrehzahl kann es sich bspw. um einen Wert zwischen 5% - 30% der maximalen Lüfterdrehzahl handeln.

Veranlasst die Steuereinheit, dass beim Einschalten der Luftversorgungseinrichtung das Gebläse aufgrund einer geringen Innenraumtemperatur lediglich mit der geringen Minimum-Lüfterdrehzahl betrieben wird, kann in einer vorteilhaften Weiterbildung die Steuereinheit dann eine Erhöhung der Lüfterdrehzahl veranlassen, wenn das Temperatursignal aussagt, dass die Innenraumtemperatur nicht mehr kleiner als der vorgegebene Temperatur-Schwellwert ist. Alternativ kann die Steuereinheit (unabhängig von der Innenraumtemperatur) auch dann eine Anhebung der Lüfterdrehzahl des Gebläses veranlassen, wenn das Gebläse bereits für mehr als eine vorgegebene Zeitdauer mit der Minimum-Lüfterdrehzahl betrieben wurde.

In einer besonders vorteilhaften Weiterbildung können auch die beiden obengenannten Wechselbedingungen derart kombiniert werden, dass die Steuereinheit dann veranlasst, dass das mit der Minimum-Lüfterdrehzahl betriebene Gebläse mit einer höheren Lüfterdrehzahl betrieben wird, wenn das Temperatursignal aussagt, dass die Innenraum nicht mehr kleiner als der vorgegebene Temperatur-Schwellwert ist, unabhängig von der Innenraumtemperatur spätestens jedoch dann, wenn das Gebläse für mehr als ein vorgegebenes Zeitintervall mit der Minimum-Lüfterdrehzahl betrieben wurde. Mit anderen Worten wird die Lüfterdrehzahl angehoben, sobald die erste der beiden Bedingungen (Temperatur-Schwellwert-Überschreitung oder Zeitablauf) erfüllt ist.

Vorteilhafterweise kann die Lüfterdrehzahl bei Erhöhung aufgrund der angestiegenen Innenraumtemperatur oder aufgrund des Ablaufs des Timers auf eine einheitlich vorgegebene Soll-Drehzahl angehoben werden, welche grundsätzlich höher ist als die Minimum-Drehzahl. Kann die Luftversorgungseinrichtung bspw. analog einer Sitzheizung in verschiedenen Leistungsstufen betrieben werden, so kann bei einer veranlassten Erhöhung der Lüfterdrehzahl das Gebläse mit einer von der angeforderten Leistungsstufe der Luftversorgungseinrichtung abhängigen Leistungsstufen-Lüfterdrehzahl betrieben werden. Analog hierzu kann auch der Temperatur-Schwellwert und/oder die Minimum-Lüfterdrehzahl in Abhängigkeit von der angeforderten Leistungsstufe der Luftversorgungseinheit vorgegeben werden.

Entsprechend dem Anheben der Lüfterdrehzahl bei Temperaturerhöhung im Fahrzeuginnenraum oder bei Ablauf des Timers veranlasst die Steuereinheit auch für den Fall, das bereits anfänglich, also mit Vorliegen des Einschaltsignals, das Temperatursignal aussagt, dass die Innenraumtemperatur nicht kleiner als ein vorgegebener Temperatur-Schwellwert ist, dass das Gebläse direkt mit einer von einer angeforderten Leistungsstufe der Luftversorgungseinrichtung abhängigen Leistungsstufen-Lüfterdrehzahl, die größer als eine vorgegebene Minimum-Lüfterdrehzahl ist, betrieben wird.

Weitere Merkmale und Vorteile der vorliegenden Erfindung werden anhand nachfolgender Beschreibung eines bevorzugten Ausführungsbeispiels in Verbindung mit der Zeichnung dargelegt. Dabei zeigt
- Fig. 1: eine stark vereinfachte Darstellung einer Rückenlehne eines Fahrzeugsitzes in Verbindung mit den wesentlichen Komponenten einer Luftversorgungseinrichtung für den Fahrzeugsitz, und
- Fig. 2: ein vereinfachtes Ablaufdiagramm durch Darstellung eines erfindungsgemäßen Verfahren zum Betreiben einer Luftversorgungseinrichtung für einen Fahrzeugsitz.

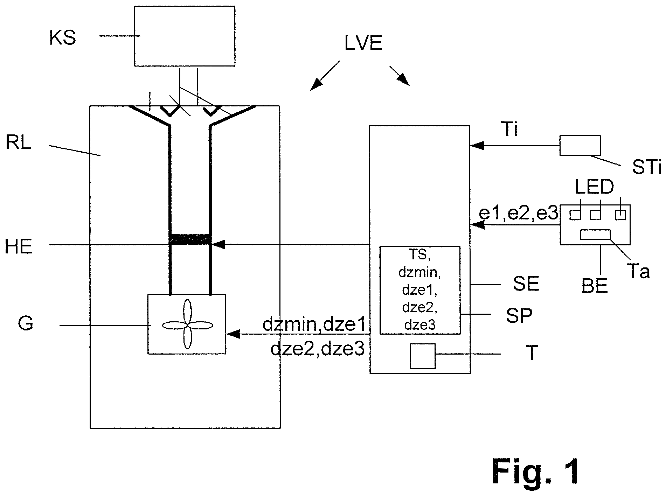

Die Fig. 1 zeigt nun in stark vereinfachter Darstellung die Rückenlehne RL eines Fahrzeugsitzes mit einer oben angeordneten Kopfstütze KS. In die

Rückenlehne integriert ist als Teil der Luftversorgungseinrichtung LVE für den Fahrzeugsitz im oberen Bereich des Fahrzeugsitzes eine Luftausströmöffnung LAÖ, über die der Kopf-, Schulter- und Nackenbereich des Sitzinsassen mit einem Luftstrom beaufschlagbar ist. Der Luftstrom ist mittels einer Steuereinheit SE durch Steuerung oder Regelung einer Lüfterdrehzahl eines Gebläses G einstellbar und über ein Heizelement HE, welches ebenfalls von der Steuereinheit SE ansteuerbar ist, erwärmbar.

Der Steuereinheit SE werden zumindest folgende Signale zugeführt: ein Einschaltsignal e1, e2 oder e3 zum Einschalten der Luftversorgungseinrichtung LVE und ein Temperatursignal Ti von einem Temperatursensor STi, dessen Temperatursignal Ti das Steuergerät SE über die Innenraumtemperatur Ti informiert. Ein Einschaltsignal e1, e2 oder e3 wird bei Betätigung eines im Fahrzeug angeordneten Bedienelements BE generiert, wobei das Bedienelement eine Taste Ta aufweist, und bei dessen Betätigung aus einer Auswahl von 3 Leistungsstufen der Luftversorgungseinrichtung eine gewünschte Leistungsstufe durch ein oder mehrmaliges Betätigen der Taste Ta angewählt werden kann. Die im Bedienelement BE dargestellten Leuchtdioden LED zeigen dem Anwender an, welche Leistungsstufe er gewählt hat. Entsprechend der gewählten Leistungsstufe wird als Einschaltsignal e1, e2 oder e3 an die Steuereinheit SE gesendet.

Schließlich umfasst die Steuereinheit SE noch einen Speicher S, in dem verschiedene Speicherwerte, wie z. B. ein Temperatur-Schwellwert TS oder vordefinierte Soll-Lüfterdrehzahlen dzmin, dze1, dze2 und dze3 für die verschiedenen Ansteuerszenarien hinterlegt sind. Weiter ist die Steuereinheit SE derart ausgestaltet, das diese ansprechend auf ein Einschaltsignal e1, e2 oder e3 das Heizelement HE und das Gebläse G einschaltet, und zumindest das Gebläse G in Abhängigkeit von der zugeführten Innenraumtemperatur Ti durch Vorgabe verschiedener Lüfterdrehzahlen dzmin, dze1, dze2 und dze3 ansteuert.

Weiter umfasst due Steuereinheit SE noch einen sog. Timer T, der bei Aktivierung des Gebläses mit einer Minimum-Drehzahl dzmin aktivierbar ist und zur Zeitdauer-Überwachung verwendet wird.

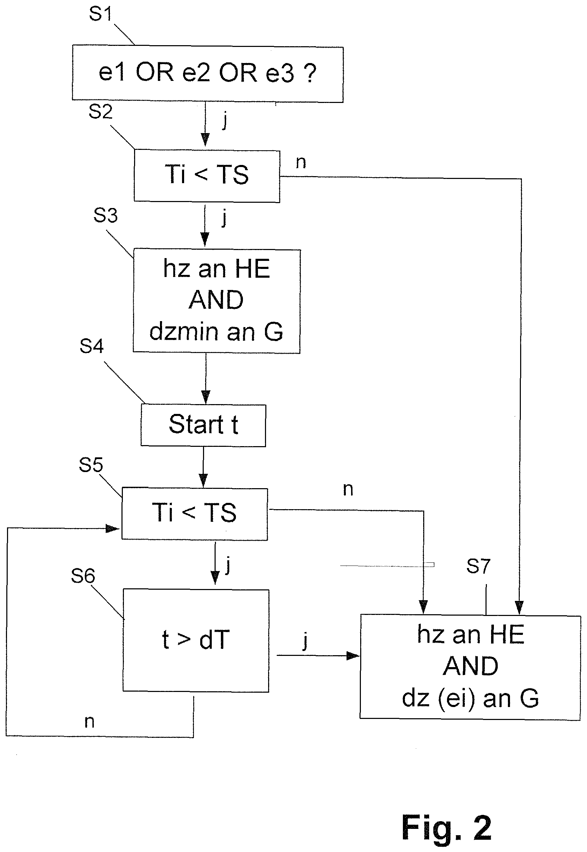

Eine vorteilhafte Ausgestaltung des erfindungsgemäßen Verfahrens zum Betreiben einer derartigen Luftversorgungseinrichtung wird nun anhand nachfolgender Figurenbeschreibung zu Fig. 2 dargestellt.

Zunächst wird in Schritt S1 in der Steuereinheit SE überprüft, ob ein Einschaltsignal e1, e2 oder e3 zum Einschalten der Luftversorgungseinrichtung LVE vorliegt. Wie bereits oben erläutert ist die Luftversorgungseinrichtung in 3 Leistungsstufen betreibbar, wobei der Anwender durch entsprechende Betätigung der Taste Ta ein Einschalten der Luftversorgungseinrichtung LVE in einer der 3 Leistungsstufen anfordern kann. Entsprechend der gewählten Leistungsstufe wird als Einschaltsignal e1, e2 oder e3 an die Steuereinheit SE gesendet.

Liegt ein Einschaltsignal e1, e2 oder e3 vor, wird zu Schritt S2 übergegangen und dort ermittelt, ob das Temperatursignal Ti aussagt, dass die aktuelle Innenraumtemperatur Ti kleiner als ein vorgegebener und abgespeicherter Temperatur-Schwellwert TS ist. Falls dies nicht der Fall ist, wird zu Schritt S7 übergegangen, wo die Steuereinheit SE ein Einschalten des Heizelements HE durch Aussenden eines Heiz-Ansteuersignals hz, ein Einschalten des Gebläses G und ein derartiges Steuern oder Regeln der Gebläseleistung veranlasst, dass das Gebläse G mit einer mit einer von der angeforderten Leistungsstufe ei (wobei i den Wert 1, 2 oder 3 haben kann) abhängigen Lüfterdrehzahl dz(ei) betrieben wird. Diese Einstellung wird beibehalten, bis der Anwender die Luftversorgungseinrichtung LVE wieder deaktiviert oder eine andere Leistungsstufe e1, e2, e3 wählt.

Wird jedoch im Schritt S2 festgestellt, dass die aktuelle Innenraumtemperatur Ti kleiner als ein vorgegebener und abgespeicherter Temperatur-Schwellwert TS ist, wird zu Schritt S3 übergegangen. Dort veranlasst die Steuereinheit SE ein Einschalten des Heizelements HE durch Aussenden eines Heiz-Ansteuersignals hz, ein Einschalten des Gebläses G und ein derartiges Steuern oder Regeln der Gebläseleistung, dass das Gebläse G mit einer mit einer vorgegebenen und abgespeicherten Minimum-Lüfterdrehzahl dzmin betrieben wird. Diese Minimum-Lüfterdrehzahl dzmin ist dabei wesentlich geringer als die oben beschriebene von der angeforderten Leistungsstufe ei abhängige Lüfterdrehzahl dz(ei).

Anschließend wird im nächsten Schritt S4 ein Timer T zur Zeitmessung gestartet, wodurch die verstrichene Zeitdauer seit Beginn der Gebläse-Ansteuerung mit der Minimum-Lüfterdrehzahl ermittelbar ist. Anschließend wird in Schritt S5 erneut überprüft, ob die aktuelle Innenraumtemperatur TI immer noch kleiner als der vorgegebene und abgespeicherte Temperatur-Schwellwert TS ist. Ist eine Temperaturerhöhung über den vorgegebenen Temperatur-Schwellwert eingetreten, wird analog zu Schritt S2 zu Schritt S7 übergegangen, wo die Steuereinheit SE ein Einschalten des Heizelements HE durch Aussenden eines Heiz-Ansteuersignals hz, ein Einschalten des Gebläses G und ein derartiges Steuern oder Regeln der Gebläseleistung, dass das Gebläse G mit einer mit einer von der angeforderten Leistungsstufe ei (wobei i den Wert 1, 2 oder 3 haben kann) abhängigen Lüfterdrehzahl dz(ei) betrieben wird, veranlasst.

Wird jedoch im Schritt S5 festgestellt, dass die aktuelle Innenraumtemperatur Ti immer noch kleiner als der vorgegebene und abgespeicherte Temperatur-Schwellwert TS ist, wird anschließend im Schritt S6 überprüft, ob die seit Beginn des Timers T verstrichene Zeitdauer t größer als eine vorgegebene Zeitdauer dT ist. Falls dies der Fall ist, wird auch von Schritt S6 nach Schritt S7 übergegangen und eine - wie bereits oben beschriebene Aktivierung und Steuerung oder Regelung des Heizelements HE und des Gebläses veranlasst. Falls die seit Beginn des Timers T verstrichene Zeitdauer t nicht größer als eine vorgegebene Zeitdauer dT ist, wird zu Schritt S5 zurückgesprungen. Dadurch kann sichergestellt werden, dass die Steuereinheit SE eine Anhebung der Lüfterleistung des Gebläses G auf eine von der angeforderten Leistungsstufe ei abhängigen Lüfterdrehzahl dz(ei) grundsätzlich dann veranlasst, wenn die Innenraumtemperatur Ti größer als der vorgegebene Temperatur-Schwellwert TS ist, spätestens jedoch nachdem die seit Beginn des Timers T verstrichene Zeitdauer t größer als die vorgegebene Zeitdauer dT ist.

## Patentansprüche

1. Fahrzeugsitz mit einer Luftversorgungseinrichtung, mit einer im oberen Bereich des Fahrzeugsitzes vorgesehenen Luftausströmöffnung, über die der Kopf-, Schulter- und Nackenbereich des Sitzinsassen mit einem Luftstrom beaufschlagbar ist, und wobei der Luftstrom mittels einer Steuereinheit durch Steuerung oder Regelung einer Lüfterdrehzahl eines Gebläses einstellbar und über ein Heizelement erwärmbar ist, und wobei die Steuereinheit zumindest ein Einschaltsignal zum Einschalten der Luftversorgungseinrichtung und ein Temperatursignal, das über die Innenraumtemperatur informiert, zugeführt wird, **dadurch gekennzeichnet, dass** die Steuereinheit (SE) ansprechend auf das Einschaltsignal (e1, e2, e3) das Heizelement (HE) und das Gebläse (G) einschaltet und zumindest das Gebläse (G) abhängig von der Innenraumtemperatur ansteuert, wobei die Steuereinheit (SE) ansprechend auf das Einschaltsignal (e1, e2, e3) veranlasst, dass das Gebläse (G) mit einer vorgegebenen Minimum-Lüfterdrehzahl (dzmin) betrieben wird, wenn das Temperatursignal (Ti) aussagt, dass die Innenraumtemperatur (Ti) kleiner als ein vorgegebener Temperatur-Schwellwert (TS) ist.

2. Fahrzeugsitz nach Anspruch 1, **dadurch gekennzeichnet, dass** die Steuereinheit (SE) veranlasst, dass das mit der Minimum-Lüfterdrehzahl (dzmin) betriebene Gebläse (G) mit einer höheren Lüfterdrehzahl, insbesondere mit einer von einer angeforderten Leistungsstufe der Luftversorgungseinrichtung (LVE) abhängigen Leistungsstufen-Lüfterdrehzahl (dze1, dze2, dze3) betrieben wird, sobald das Temperatursignal (Ti) aussagt, dass die Innenraumtemperatur (Ti) nicht mehr kleiner als ein vorgegebener Temperatur-Schwellwert (TS) ist.

3. Fahrzeugsitz nach Anspruch 1 oder 2, **dadurch gekennzeichnet, dass** die Steuereinheit (SE) veranlasst, dass das mit der Minimum-Lüfterdrehzahl (dzmin) betriebene Gebläse (G) unabhängig vom Temperatursignal (Ti) spätestens dann mit einer höheren Lüfterdrehzahl, insbesondere mit einer von einer angeforderten Leistungsstufe der Luftversorgungseinrichtung (LVE) abhängigen Leistungsstufen-Lüfterdrehzahl (dze1, dze2, dze3) betrieben wird, wenn das Gebläse (G) für mehr als eine vorgegebene Zeitdauer (dT) mit der Minimum-Lüfterdrehzahl (dzmin) betrieben wurde.

4. Fahrzeugsitz nach einem der vorangegangenen Ansprüche, **dadurch gekennzeichnet, dass** die Steuereinheit (SE) ansprechen auf das Einschaltsignal (e1, e2, e3) veranlasst, dass das Gebläse (G) direkt mit einer von einer angeforderten Leistungsstufe der Luftversorgungseinrichtung (LVE) abhängigen Leistungsstufen-Lüfterdrehzahl (Dze1, dze2, dze3), die größer als eine vorgegebene Minimum-Lüfterdrehzahl (dzmin) ist, betrieben wird, wenn das Temperatursignal (Ti) aussagt, dass die Innenraumtemperatur (Ti) nicht kleiner als ein vorgegebener Temperatur-Schwellwert (TS) ist.

5. Verfahren zum Betreiben einer Luftversorgungseinrichtung für einen Fahrzeugsitz, mit einer im oberen Bereich des Fahrzeugsitzes vorgesehenen Luftausströmöffnung, über die der Kopf-, Schulter- und Nackenbereich des Sitzinsassen mit einem Luftstrom beaufschlagbar ist, und wobei der Luftstrom mittels einer Steuereinheit durch Steuerung oder Regelung einer Lüfterdrehzahl eines Gebläses einstellbar und über ein Heizelement erwärmbar ist, und wobei die Steuereinheit zumindest ein Einschaltsignal zum Einschalten der Luftversorgungseinrichtung und ein Temperatursignal, das über die Innenraumtemperatur informiert, zugeführt wird, **gekennzeichnet durch** die folgenden Schritte,
- (S1) Überprüfen, ob ein Einschaltsignal (e1, e2, e3) zum Einschalten der Luftversorgungseinrichtung (LVE) vorliegt, und wenn dies der Fall ist, anschließend
- (S2) Ermitteln ob die Innenraumtemperatur (Ti) einen vorgegebenen Temperatur-Schwellwert (TS) überschreitet, und wenn dies der Falls ist, Einschalten des Heizelements (HE) und des Gebläses (G) und derartiges Steuern oder Regeln der Gebläseleistung, dass das Gebläse (G) mit einer von der angeforderten Leistungsstufe der Luftversorgungseinrichtung (LVE) abhängigen Leistungsstufen-Lüfterdrehzahl (dze1, dze2, dze3) betrieben wird, ansonsten,
- (S3) Einschalten des Heizelements (HE) und des Gebläses (G) und derartiges Steuern oder Regeln der Gebläseleistung, dass das Gebläse (G) mit einer vorgegebenen Minimum-Lüfterdrehzahl (dzmin), die kleiner als die Leistungsstufen-Lüfterdrehzahl (dze1, dze2, dze3) ist, betrieben wird, anschließend
- (S4) Starten eines Timers (T) zur Zeitmessung, anschließend
- (S5) Überprüfen, ob die Innenraumtemperatur (Ti) den vorgegebenen Temperatur-Schwellwert (TS) überschreitet, und wenn dies der Fall ist, Steuern oder Regeln der Gebläseleistung, so dass das Gebläse (G) mit einer von der angeforderten Leistungsstufe der Luftversorgungseinrichtung (LVE) abhängigen Leistungsstufen-Lüfterdrehzahl (dze1, dze2, dze3) betrieben wird, ansonsten
- (S6) Überprüfen, ob die seit Starten des Timers (T) verstrichene Zeitdauer (t) größer als eine vorgegebene Zeitdauer (dT) ist, und wenn dies nicht der Fall ist, Zurückkehren zu (S5), ansonsten
- (S7) Steuern oder Regeln der Gebläseleistung, so dass das Gebläse (G) mit einer von der angeforderten Leistungsstufe der Luftversorgungseinrichtung (LVE) abhängigen Leistungsstufen-Lüfterdrehzahl (dze1, dze2, dze3) betrieben wird.

## Claims

1. Vehicle seat with an air-supply device having an air-outflow opening which is provided in the upper region of the vehicle seat, and via which the head, shoulder and neck region of the seat occupant can be supplied with an air stream, wherein the air stream can be adjusted by means of a control unit, by control or regulation of a speed of a fan, and can be heated via a heating element, and wherein the control unit is fed at least one switch-on signal, for switching on the air-supply device, and a temperature signal, which gives information relating to the interior temperature, **characterized in that** the control unit (SE), in response to the switch-on signal (e1, e2, e3), switches on the heating element (HE) and the fan (G) and activates at least the fan (G) in dependence on the interior temperature, wherein the control unit (SE), in response to the switch-on signal (e1, e2, e3), causes the fan (G) to be operated at a preset minimum fan speed (dzmin) when the temperature signal (Ti) indicates that the interior temperature (Ti) is lower than a preset threshold temperature value (TS) .

2. Vehicle seat according to Claim 1, **characterized in that** the control unit (SE) causes the fan (G) operated at the minimum fan speed (dzmin) to be operated at a higher fan speed, in particular at a power-setting fan speed (dzel, dze2, dze3) dependent on a required power setting of the air-supply device (LVE), as soon as the temperature signal (Ti) indicates that the interior temperature (Ti) is no longer lower than a preset threshold temperature value (TS).

3. Vehicle seat according to Claim 1 or 2, **characterized in that**, irrespective of the temperature signal (Ti), the control unit (SE) causes the fan (G) operated at the minimum fan speed (dzmin) to be operated at a higher fan speed, in particular at a power-setting fan speed (dzel, dze2, dze3) dependent on a required power setting of the air-supply device (LVE), at the latest when the fan (G) has been operating at the minimum fan speed (dzmin) for more than a preset period of time (dT).

4. Vehicle according to one of the preceding claims, **characterized in that** the control unit (SE), in response to the switch-on signal (e1, e2, e3), causes the fan (G) to be operated directly at a power-setting fan speed (dzel, dze2, dze3) dependent on a required power setting of the air-supply device (LVE) and greater than a preset minimum fan speed (dzmin) when the temperature signal (Ti) indicates that the interior temperature (Ti) is not lower than a preset threshold temperature value (TS).

5. Method for operating an air-supply device for a vehicle seat having an air-outflow opening which is provided in the upper region of the vehicle seat, and via which the head, shoulder and neck region of the seat occupant can be supplied with an air stream, wherein the air stream can be adjusted by means of a control unit, by control or regulation of a speed of a fan, and can be heated via a heating element, and wherein the control unit is fed at least one switch-on signal, for switching on the air-supply device, and a temperature signal, which gives information relating to the interior temperature, **characterized by** the following steps:
- (S1) checking whether a switch-on signal (e1, e2, e3) for switching on the air-supply device (LVE) is present and, if this is the case, then
- (S2) determining whether the interior temperature (Ti) is exceeding a preset threshold temperature value (TS) and, if this is the case, switching on the heating element (HE) and the fan (G) and controlling or regulating the fan power such that the fan (G) is operated at a power-setting fan speed (dzel, dze2, dze3) dependent on the required power setting of the air-supply device (LVE), otherwise
- (S3) switching on the heating element (HE) and the fan (G) and controlling or regulating the fan power such that the fan (G) is operated at a preset minimum fan speed (dzmin) which is lower than the power-setting fan speed (dzel, dze2, dze3), then
- (S4) starting a timer (T) for time-measuring purposes, then
- (S5) checking whether the interior temperature (Ti) is exceeding the preset threshold temperature value (TS) and, if this is the case, controlling or regulating the fan power so that the fan (G) is operated at a power-setting fan speed (dzel, dze2, dze3) dependent on the required power setting of the air-supply device (LVE), otherwise
- (S6) checking whether the period of time (t) elapsed since the timer (T) started is greater than a preset period of time (dT) and, if this is not the case, returning to (S5), otherwise
- (S7) controlling or regulating the fan power so that the fan (G) is operated at a power-setting fan speed (dzel, dze2, dze3) dependent on the required power setting of the air-supply device (LVE).

## Revendications

1. Siège de véhicule comprenant un dispositif d'alimentation en air, une ouverture de sortie d'air qui est prévue dans la zone supérieure du siège du véhicule et par laquelle la région couvrant la tête, les épaules et le cou de l'occupant du siège peut être soumise à un courant d'air, et le courant d'air pouvant être réglé au moyen d'une unité de commande par commande ou régulation de la vitesse de ventilateur d'une soufflante et pouvant être chauffé par un élément chauffant, et l'unité de commande recevant au moins un signal d'activation destiné à activer le dispositif d'alimentation en air et un signal de température qui informe sur la température de l'habitacle, **caractérisé en ce que** l'unité de commande (SE) active, en réponse au signal d'activation (e1, e2, e3), l'élément chauffant (HE) et la soufflante (G) et commande au moins la soufflante (G) en fonction de la température de l'habitacle, l'unité de commande (SE) ordonnant, en réponse au signal d'activation (e1, e2, e3), le fonctionnement de la soufflante (G) à une vitesse de rotation de ventilateur minimale spécifiée (dzmin) lorsque le signal de température (Ti) indique que la température (Ti) de l'habitacle est inférieure à une valeur de seuil de température spécifiée (TS).

2. Siège de véhicule selon la revendication 1, **caractérisé en ce que** l'unité de commande (SE) ordonne le fonctionnement de la soufflante (G), fonctionnant à la vitesse de rotation de ventilateur minimale (dzmin), à une vitesse de rotation de ventilateur plus élevée, notamment à une vitesse de rotation de ventilateur à niveaux de puissance (dzel, dze2, dze3) dépendant d'un niveau de puissance requis du dispositif d'alimentation en air (LVE), dès que le signal de température (Ti) indique que la température (Ti) de l'habitacle n'est plus inférieure à une valeur de seuil de température spécifiée (TS).

3. Siège de véhicule selon la revendication 1 ou 2, **caractérisé en ce que** l'unité de commande (SE) ordonne le fonctionnement de la soufflante (G) à la vitesse de rotation de ventilateur minimale (dzmin), indépendamment du signal de température (Ti), au plus tard à une vitesse de rotation de ventilateur plus élevée, notamment à une vitesse de rotation de ventilateur à niveaux de puissance (dzel, dze2, dze3) dépendant d'un niveau de puissance requis du dispositif d'alimentation en air (LVE), seulement lorsque la soufflante (G) a fonctionné à la vitesse de ventilateur minimale (dzmin) pendant plus d'un intervalle de temps (dT) .

4. Siège de véhicule selon l'une des revendications précédentes, **caractérisé en ce que** l'unité de commande (SE) ordonne, en réponse au signal d'activation (e1, e2, e3), le fonctionnement de la soufflante (G) directement à une vitesse de rotation de ventilateur à niveaux de puissance (dzel, dze2, dze3) dépendant d'un niveau de puissance requis du dispositif d'alimentation en air (LVE), qui est supérieure à une vitesse de rotation de ventilateur minimale spécifiée (dzmin), lorsque le signal de température (Ti) indique que la température (Ti) de l'habitacle n'est pas inférieure à la valeur de seuil de température spécifiée (TS).

5. Procédé de fonctionnement d'un dispositif d'alimentation en air destiné à un siège de véhicule et comprenant une ouverture de sortie d'air qui est prévue dans la zone supérieure du siège du véhicule et par laquelle la région couvrant la tête, les épaules et le cou de l'occupant du siège peut être soumise à un courant d'air, et le courant d'air pouvant être réglé au moyen d'une unité de commande par commande ou régulation de la vitesse de ventilateur d'une soufflante et pouvant être chauffé par un élément chauffant, et l'unité de commande recevant au moins un signal d'activation destiné à activer le dispositif d'alimentation en air et un signal de température qui informe sur la température de l'habitacle, **caractérisé par** les étapes suivantes,
- (S1) vérifier la présence d'un signal d'activation (e1, e2, e3) destiné à activer le dispositif d'alimentation en air (LVE), puis si c'est le cas,
- (S2) déterminer si la température (Ti) de l'habitacle dépasse une valeur de seuil de température spécifiée (TS), et si c'est le cas, activer l'élément chauffant (HE) et la soufflante (G) et commander ou réguler la puissance de la soufflante de telle manière que la soufflante (G) fonctionne à une vitesse de rotation de ventilateur à niveaux de puissance (dzel, dze2, dze3) dépendant du niveau de puissance requis du dispositif d'alimentation en air (LVE), sinon,
- (S3) activer l'élément chauffant (HE) et la soufflante (G) et commander ou réguler la puissance de la soufflante de manière que la soufflante (G) fonctionne à une vitesse de rotation de ventilateur minimale spécifiée (dzmin), qui est inférieure à la vitesse de rotation de ventilateur (dzel, dze2, dze3), puis
- (S4) démarrer un chronomètre (T) pour mesurer le temps, puis
- (S5) vérifier si la température (Ti) de l'habitacle dépasse la valeur de seuil de température spécifiée (TS), et si c'est le cas, commander ou réguler la puissance de la soufflante de manière que la soufflante (G) fonctionne à une vitesse de rotation de ventilateur à niveaux de puissance (dzel, dze2, dze3) dépendant du niveau de puissance requis du dispositif d'alimentation en air (LVE), sinon
- (S6) vérifier si la durée (t) qui s'est écoulée depuis le démarrage du chronomètre (T) est supérieure à une durée prédéterminée (dT), et si ce n'est pas le cas, retourner à (S5), sinon
- (S7) commander ou réguler la puissance de la soufflante de manière que la soufflante (G) fonctionne à une vitesse de rotation de ventilateur à niveaux de puissance (dzel, dze2, dze3) dépendant du niveau de puissance requis du dispositif d'alimentation en air (LVE).
